# EUROPÄISCHE PATENTSCHRIFT

(11) **EP 1 958 013 B1**
(45) Veröffentlichungstag und Bekanntmachung des Hinweises auf die Patenterteilung: **13.04.2016**
(21) Anmeldenummer: 06818576.8
(22) Anmeldetag: 16.11.2006
(51) Int. Cl.: G02B 6/44, H02G 9/10

(54) **EINBAUELEMENT FÜR EIN KABELVERZWEIGERGEHÄUSE**
INSTALLED ELEMENT FOR A CABLE JUNCTION HOUSING
ÉLÉMENT ENCASTRABLE POUR BOÎTIER DE DÉRIVATION DE CÂBLES

(30) Priorität: 08.12.2005 DE 202005019319 U
(43) Veröffentlichungstag der Anmeldung: 20.08.2008
(73) Patentinhaber: CCS Technology, Inc., Wilmington, DE 19803 (US)
(72) Erfinder: MÜLLER, Michael, 58706 Menden (DE)
(74) Vertreter: Sturm, Christoph
(86) Internationale Anmeldenummer: PCT/EP2006/010986
(87) Internationale Veröffentlichungsnummer: WO 2007/065540

(56) Entgegenhaltungen:
- EP-A- 0 585 809
- EP-A2- 1 310 816
- WO-A-2004/021061
- DE-A1- 4 207 531
- DE-A1- 10 238 189
- US-A- 5 734 776
- US-A1- 2005 111 810

## Beschreibung

Die Erfindung betrifft ein Kabelverzweigergehäuse, nämlich ein Straßenverteilergehäuse, eines Nachrichtkabelnetzwerks.

Aus dem Produktkatalog "Zubehör für Kupfer-Nachrichtennetze, Corning Cable Systems GmbH & Co. KG, Ausgabe 1, Seite 75, Jahr 2000" ist ein Kabelverzweigergehäuse (KVz) bekannt, welches in als Kupfer-Nachrichtennetzen ausgebildeten Nachrichtenkabelnetzwerken der Aufnahme von Endverschlüssen an Schaltungspunkten und Verteilungspunkten im Nachrichtenkabeinetzwerk dient. Neben den Endverschlüssen können in derartige Kabelverzweigergehäuse eine Vielzahl weiterer Baugruppen eingebaut werden, so z. B. Anschluss-und Verteilerleisten für Kabeladern von Kupferkabeln. So ist aus dem Produktkatalog "Anschluss- und Verteilersysteme, Coming Cable Systems GmbH & Co. KG, Ausgabe 1, Seite 16, Jahr 2000" ein mit Anschluss-und Verteilerleisten bestücktes Kabelverzweigergehäuse bekannt. Kabelverzweigergehäuse werden auch als Straßenverteilergehäuse bezeichnet.

Die aus dem obigen Stand der Technik bekannten Kabelverzweigergehäuse bzw. Straßenverteilergehäuse sind auf die Verwendung in Kupfer-Nachrichtennetzen zugeschnitten. Die Handhabung von Lichtwellenleiterkabeln bzw. von Verbindungen, insbesondere von Spleißverbindungen, zwischen in Lichtwellenfeiterkabeln geführten Lichtwellenleitern eines Glasfaser-Nachrichtennetzes bzw. eines hybriden Kupfer-Gläsfaser-Nachrichtennetzes bereitet mit den aus den Stand der Technik bekannten Kabelverzweigergehäusen Schwierigkeiten, da dieselben nur über eine geringe Bautiefe verfügen, und daher nur eine begrenzte Anzahl von Verbindungen, insbesondere von Spleißverbindungen, in denselben untergebracht werden kann.

Daher muss dann, wenn in den aus dem Stand der Technik bekannten Kabelverzweigergehäusen bzw. Straßenverteilergehäusen eine größere Anzahl von Spleißverbindungen oder auch Patchverbindungen zwischen Lichtwellnelietem abgelegt werden soll, entweder auf ein größeres Kabelverzweigergehäuse umgestellt oder ein zweites Kabelverzweigergehäuse aufgebaut werden.

Die DE 92 07 531 A1 sowie die EP 0 585 809 A1 betreffen jeweils Verteiterschränke für Lichtwellenleiterkabel, die über einen Schwenkrahmen verfügen, der an einem Gehäuse schwenkbar befestigt ist. Die US 5,734,776 betrifft eine Kabelmuffe.

Hiervon ausgehend liegt der vorliegenden Erfindung das Problem zu Grunde, ein derartiges ein Kabelverzweigergehäuse eines Nachrichtkabelnetzwerks zu schaffen.

Dieses Problem wird durch ein Kabelverzweigergehäuse eines Nachrichtkabelnetzwerks gemäß Anspruch 1 gelöst.

Durch Verwendung des erfindungsgemäßen Einbauelements in aus dem Stand der Technik bekannten Kabelverzweigergehäusen können in denselben hohe Packungsdichten von Spleißverbindungen und/oder Patchverbindungen realisiert werden. Hierzu dienen die beiden Montageebenen des erfindungsgemäßen Einbauelements, wobei die erste von der Rückwand des Grundkörpers definierte Montageebene der Handhabung ankommender und abgehender Lichtwellenleiterkabel dient, und wobei die gegenüber der ersten Montageebene schwenkbare zweite Montageebene, die von der Vorderwand des Einbauelements definiert ist, der Handhabung von Spleißverbindungen und/oder Patchverbindungen zwischen den in den ankommenden und abgehenden Lichtwellenleiterkabeln geführten Lichtwellenleitem dient.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, anhand der Zeichnung näher erläutert. In der Zeichnung zeigt:
- Fig. 1:: ein Einbauelement eines Kabelverzweigergehäuse eines Nachrichtkabelnetzwerks in einer ersten perspektivischen Seitenansicht von vorne; und
- Fig. 2:: das Einbauelement gemäß Fig. 1 in einer zweiten perspektivischen Seitenansicht von vorne.

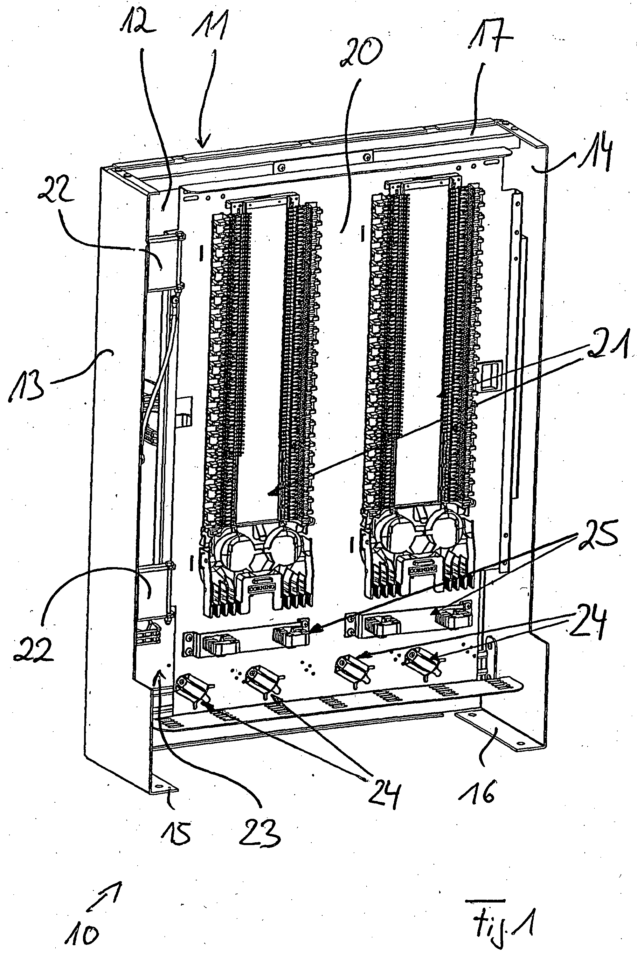

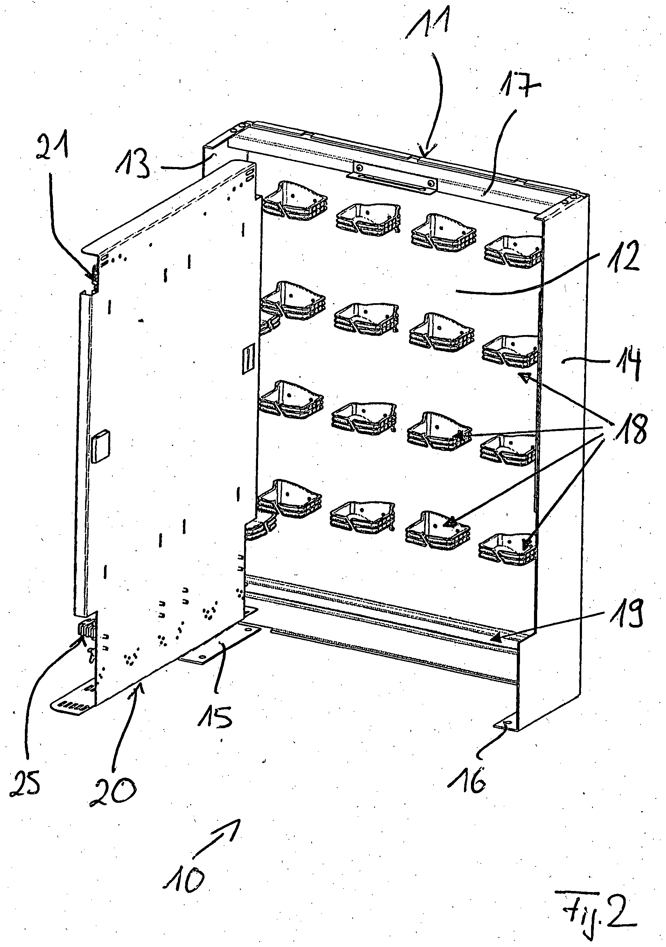

Nachfolgend wird die hier vorliegende Erfindung unter Bezugnahme auf Fig. 1 und 2 in größerem Detail beschrieben.

Fig. 1 und 2 zeigen ein Einbauelement 10 für ein Kabelverzweigergehäuse bzw. ein Straßenverteilergehäuse, wobei derartige Kabelverzweigergehäuse bzw. Straßenverteilergehäuse aus dem Stand der Technik bekannt sind und nach dem Stand der Technik in aus Kupferkabeln aufgebauten Nachrichtenkabelnetzwerken zum Einsatz kommen. Das Einbauelement dient der Handhabung von Verbindungen zwischen in Lichtwellenleiterkabeln geführten Lichtwellenleitem innerhalb eines solchen Kabelverzweigergehäuses bzw. Straßenverteilergehäuses. Mit dem Einbauelement sind demnach Verbindungen zwischen Lichtwellenleitem in Kabelverzweigergehäusen strukturiert handhabbar, wodurch die aus dem Stand der Technik vorbekannten Kabelverzweigergehäuse nunmehr auch in aus Lichtwellenleiterkabeln gebildeten Nachrichtenkabelnetzwerken zum Einsatz kommen können.

Nachfolgend soll davon ausgegangen werden, dass das Einbauelement der Handhabung von Spleißverbindungen zwischen in Lichtwellenleiterkabeln geführten Lichtwellenleitem dient. Es sei darauf hingewiesen, dass mit dem Einbauelement jedoch auch Patchverbindungen zwischen Lichtwellenleitern gehandhabt werden können.

Das erfindungsgemäße. Einbauelement 10 für ein Kabelverzweigergehäuse bzw. ein Straßenverteilergehäuse verfügt über einen im Kabelverzweigergehäuse fest bzw. ortsfest montierbaren Grundkörper 11. Der Grundkörper 11 (siehe insbesondere Fig. 2) verfügt im gezeigten Ausführungsbeispiel über eine Rückwand 12 sowie zwei sich gegenüberliegende Seitenwände 13 und 14. In einem unteren Abschnitt sind die Seitenwände 13 und 14 unter Ausbildung von Montagefüßen 15 bzw. 16. um in etwa 90° abgewinkelt, wobei der Grundkörper 11 des erfindungsgemäßen Einbauelements 10 über die Montagefüße 15 und 16 ortsfest im Kabelverzweigergehäuse bzw. Straßenverteilergehäuse montiert werden kann. An einem den Montagefüßen 15 und 16 gegenüberliegenden Abschnitt sind die beiden Seitenwände 13 und 14 des Grundkörpers 11 über eine Strebe 17 miteinander verbunden.

Die Rückwand 12 des Grundkörpers 11 des erfindungsgemäßen Einbauelements 10 definiert eine erste Montageebene bzw. erste Handhabungsebene, in welcher ankommende und abgehende Lichtwellenleiterkabel abfangbar sowie Überlängen derselben ablegbar sind. Hierzu sind der Rückwand 12 mehrere Kabelführungselemente 18 zugeordnet, die mit der Rückwand 12 fest verbunden sind. Im gezeigten Ausführungsbeispiel sind der Rückwand 12 des Grundkörpers 11 insgesamt sechszehn derartige Kabelführungselemente 18 zugeordnet, die matrixartig in Form von vier nebeneinander verlaufenden Spalten und vier übereinander verlaufenden Reihen an der Rückwand 12 des Grundkörpers 11 angeordnet sind. Diese Anzahl der Kabelführungselemente 18 sowie der Spalten und Reihen ist rein exemplarisch.

Ankommende sowie abgehende Lichtwellenleiterkabel sind von unten kommend in das erfindungsgemäßen Einbauelement 10 einführbar bzw. aus demselben ausführbar, wobei Überlängen der Lichtwellenleiterkabel in Form von Schlaufen bzw. Loops in den der Rückwand 12 zugeordneten Kabelführungselementen 18 geführt bzw. abgelegt werden.

Die Lichhnrellenleiterkabel sind an einem dem Grundkörper 11 zugeordneten Zugabfangungselement 19 insbesondere gegenüber einer Zugbeanspruchung abfangbar, wobei sich das Zugabfangungselement 19 im unteren Bereich des Grundkörpers 11 zwischen den beiden Seitenwänden 13 und 14 desselben erstreckt. Das dem Basiskörper 11 zugeordnete Zugabfangungselement 19 ist in Form einer Zugabfangleiste ausgebildet, so dass Lichtwellenleiterkabel über die gesamte Breite des Einbauelements 10 von unten her in den Grundkörper und damit in den Bereich der von der Rückwand 12 desselben definierten ersten Montageebene eingeführt bzw. ausgeführt und abgefangen werden könnten.

Das erfindungsgemäße Einbauelement 10 für ein Kabelverzweigergehäuse verfügt neben dem Grundkörper 11, dessen Rückwand 12 die erste Montageebene definiert, über eine schwenkbar am Grundkörper 11 befestigte Vorderwand 20, wobei die Vorderwand 20 eine zweite Montageebene bzw. zweite Handhabungsebene definiert, an welcher im gezeigten Ausführungsbeispiel Spleißverbindungen zwischen in den abkommenden und abgehenden Lichtwellenleiterkabeln geführten. Lichtwellenleitem handhabbar sind. Im gezeigten Ausführungsbeispiel sind an der Vorderwand 20, die schwenkbar mit dem Grundkörper 11 verbünden ist, zwei Spleißkassettenhalter 21 befestigt, wobei an jedem der Spleißkassettenhalter 21 mehrere nicht-dargestellte Spleißkassetten befestigt werden können, die der Aufnahme von Spleißverbindungen zwischen Lichtwellenleitern dienen.

Gemäß Fig. 1 und 2 ist die Vorderwand 20 des erfindungsgemäßen Einbauelements 10 mit der Seitenwand 13 des Grundkörpers 11 über zwei Scharniere 22 schwenkbar verschwunden, wobei die Scharniere 22 einerseits an der Seitenwand 13 und andererseits an einer der Seitenwand 13 benachbarten Kante der Vorderwand 20 angreifen. Über die Scharniere 22 kann die Vorderwand 20 aus der in Fig. 1 dargestellten eingeschwenkten Position in die in Fig. 2 dargestellte ausgeschwenkte Position sowie zurück verschwenkt werden. Die Vorderwand 20 des erfindungsgemäßen Einbauelements ist symmetrisch ausgeführt, derart, dass die Vorderwand 20 auch an der der Seitenwand 13 gegenüberliegenden Seitenwand 14 des Grundkörpers 11 über Scharniere schwenkbar verschwunden werden kann.

Wie bereits erwähnt, dient die durch die Rückwand 12 des Grundkörpers 11 definierte erste Montageebene der Abfangung und Handhabung der ankommenden und abgehenden Lichtwellenleiter, wohingegen die durch die Vorderwand 20 definierte zweite Montageebene der Handhabung der Spleißverbindungen zwischen den in den ankommenden und abgehenden Lichtwellenleiterkabeln geführten Lichtwellenleitem dient. Die in den ankommenden und abgehenden Lichtwellenleiterkabeln geführten Lichtwellenleiter sind in Form sogenannter Lichtwellenleiterbündel zwischen der durch die Rückwand 12 definierten ersten Montageebene und der durch die Vorderwand 20 definierten zweiten Montageebene überführbar, wobei hierzu eine Durchführung 23 dient.

Die Durchführung 23 zur Überführung von Lichtwellenleiterbündeln zwischen den beiden Montageebenen ist in einem benachbart zur Seitenwand 13 des Grundkörpers 11 verlaufenden Abschnitt der Vorderwand 20 dadurch ausgebildet, dass die Vorderwand 20 in diesem Abschnitt eine verkürzte Breite aufweist. So wird zwischen der Seitenwand 13 des Grundkörpers 11 und der Vorderwand 20 die Durchführung 23 geschaffen, durch die Lichtwellenleiterbündel zwischen der durch die Rückwand 12 definierten ersten Montageebene und der durch die Vorderwand 20 definierten zweiten Montageebene überführbar sind. Gemäß Fig. 1 ist die Durchführung 23 in einem unteren Abschnitt der Vorderwand 20 unterhalb des unteren Scharniers 22 ausgebildet.

Neben den bereits erwähnten Spleißkassettenhaltern 21 sind an der Vorderwand 20 weiterhin Führungselemente 24 sowie Zugabfangungselemente 25 für Lichtwellenleiterbündel befestigt. Die Führungselemente 24 dienen der Führung der Lichtwellenleiterbündel im Bereich der durch die Vorderwand definierten zweiten Montageebene unter Einhaltung zulässiger Mindestbiegeradien für die Lichtwellenleiter. Die Zugabfangungselemente dienen insbesondere der Zugabfangung der Lichtwellenleiterbündel im Bereich der zweiten Montageebene.

### Bezugszeichenliste

- 10: Einbauelement
- 11: Grundkörper
- 12: Rückwand
- 13: Seitenwand
- 14: Seitenwand
- 15: Montagefuß
- 16: Montagefuß
- 17: Strebe
- 18: Kabelführungselement
- 19: Zugabfangungselement
- 20: Vorderwand
- 21: Spleißkassettenhalter
- 22: Scharnier
- 23: Durchführung
- 24: Führungselement
- 25: Zugabfangungselement

## Patentansprüche

1. Kabelverzweigergehäuse, nämlich Straßenverteilergehäuse, eines Nachrichtkabelnetzwerks, mit einem Einbauelement zur Handhabung von Spleißverbindungen und/oder Patchverbindungen zwischen in Lichtwellenleiterkabeln geführten Lichtwellenleitern innerhalb des Kabeiverzweigergehäuses, mit einem im Kabelverzweigergehäuse fest montierbaren Grundkörper (11) des Einbauelements, wobei der Grundkörper (11) eine Rückwand (12), eine Vorderwand (20) und mindestens eine Seitenwand (13, 14) aufweist, wobei die Rückwand (12) des Grundkörpers (11) eine erste Montageebene definiert, in der ankommende und abgehende Lichtwellenleiterkabel dadurch abfangbar und Überlängen derselben dadurch ablegbar sind, dass an der Rückwand (12) des Grundkörpers (11) matrixartig bzw. in Form von nebeneinander verlaufenden Spalten und übereinander verlaufenden Reihen mehrere Kabelführungselemente (18) befestigt sind, an welchen die ankommenden und abgehenden Lichtwellenleiterkabel im Bereich der ersten Montageebene unter Einhaltung zulässiger Mindestbiegeradien führbar sind, wobei die Vorderwand (20) eine zweite Montageebene definiert, an der Spleißkassetten zur Handhabung von Spleißverbindungen und/oder Baugruppen zur Handhabung von Patchverbindungen zwischen den in den ankommenden und abgehenden Lichtwellenleiterkabeln geführten Lichtwellenleitern befestigt sind, wobei die Vorderwand (20) an einer Seitenwand (13) schwenkbar befestigt ist, und wobei Lichtwellenleiterbündel zwischen der durch die Rückwand (12) definierten ersten Montageebene und der durch die Vorderwand (20) definierten zweiten Montageebene dadurch überführbar sind, dass die Vorderwand (20) zumindest in einem Abschnitt, der benachbart zur der Seitenwand (13) des Grundkörpers (11) verläuft, an welcher die Vorderwand (20) schwenkbar befestigt ist, eine verkürzte Breite aufweist, um so zwischen der Seitenwand (13) des Grundkörpers (11) und der Vorderwand (20) eine Durchführung (23) zu schaffen.

2. Kabelverzweigergehäuse nach Anspruch 1, **dadurch gekennzeichnet, dass** dem Grundkörper (11) mindestens ein Zugabfangungselement (19) zugeordnet ist, um die ankommenden und abgehenden Lichtwellenleiterkabel im Bereich der ersten Montageebene insbesondere gegenüber einer Zugbeanspruchung abzufangen..

3. Kabelverzweigergehäuse nach Anspruch 1 oder 2, **dadurch gekennzeichnet, dass** die Vorderwand (20) über vorzugsweise zwei Scharniere (22) an einer Seitenwand (13) des Grundkörpers (11) schwenkbar befestigt ist, wobei die Scharniere (22) einerseits an der Seitenwand (13) und andererseits an einer der Seitenwand benachbarten Kante der Vorderwand (20) angreifen.

4. Kabelverzweigergehäuse nach einem oder mehreren der Ansprüche 1 bis 3, **dadurch gekennzeichnet, dass** an der Vorderwand (20) mindestens ein Spleißkassettenhalter (21) zur Aufnahme von der Handhabung von Spleißverbindungen dienenden Spleißkassetten und/oder mindestens eine Baugruppe zur Handhabung von Patchverbindungen befestigt ist.

5. Kabelverzweigergehäuse nach einem oder mehreren der Ansprüche 1 bis 4, **dadurch gekennzeichnet, dass** durch die Durchführung (23) Lichtwellenleiterbündel zwischen der durch die Rückwand (12) definierten ersten Montageebene und der durch die Vorderwand (20) definierten zweiten Montageebene überführbar sind.

6. Kabelverzweigergehäuse nach einem oder mehreren der Ansprüche 1 bis 5, **dadurch gekennzeichnet, dass** die Durchführung (23) in einem unteren Abschnitt der Vorderwand (20) ausgebildet ist.

7. Kabelverzweigergehäuse nach einem oder mehreren der Ansprüche 1 bis 6, **dadurch gekennzeichnet, dass** an der Vorderwand (20) mindestens ein Zugabfangungselement (25) und/oder mindestens ein Führungselement (24) befestigt, um die Lichtwellenleiterbündel im Bereich der zweiten Montageebene insbesondere gegenüber einer Zugbeanspruchung abzufangen und/oder um die Lichtwellenleiterbündel im Bereich der zweiten Montageebene unter Einhaltung zulässiger Mindestbiegeradien zu führen.

## Claims

1. Cable junction housing, specifically a roadside distribution housing, of a telecommunications cable network having an installed element for handling spliced joints and/or patch joints between optical waveguides routed in optical waveguide cables within the cable junction housing, with a basic body (11) of the installed element which can be fixedly mounted in the cable junction housing, the basic body (11) having a rear wall (12), a front wall (20) and at least one side wall (13,14), the rear wall (12) of the basic body (11) defining a first mounting plane, in which incoming and outgoing optical waveguide cables can be supported and their excess lengths can be deposited, by a plurality of cable-routing elements (18) being fixed on the rear wall (12) of the basic body (11) in the manner of a matrix or in the form of columns running next to one another and rows running one above the other, on which cable-routing elements (18) the incoming and outgoing optical waveguide cables can be routed in the region of the first mounting plane whilst maintaining permissible minimum bending radii, the front wall (20) defining a second mounting plane, on which splicing cassettes for handling sliced joints and/or assemblies for handling patch joints are fixed between the optical waveguides routed in the incoming and outgoing optical waveguide cables, the front wall (20) being fixed pivotably on a side wall (13), and thus it being possible to move over optical waveguide bundles between the first mounting plane defined by the rear wall (12) and the second mounting plane defined by the front wall (20), the front wall (20) by having a shortened width at least in one section, which runs adjacent to the side wall (13) of the basic body (11) on which the front wall (20) is fixed pivotably, in order thus to provide a bushing (23) between the side wall (13) of the basic body (11) and the front wall (20).

2. Cable junction housing according to Claim 1, **characterized in that** at least one tension support element (19) is associated with the basic body (11) in order to support the incoming and outgoing optical waveguide cables in the region of the first mounting plane in particular with respect to tensile loading.

3. Cable junction housing according to Claim 1 or 2, **characterized in that** the front wall (20) is fixed pivotably to a side wall (13) of the basic body (11) via preferably two hinges (22), the hinges (22) acting firstly on the side wall (13) and secondly on an edge of the front wall (20) which is adjacent to the side wall.

4. Cable junction housing according to one or more of Claims 1 to 3, **characterized in that** at least one splicing cassette holder (21) for accommodating splicing cassettes used for handling spliced joints and/or at least one assembly for handling patch joints is fixed on the front wall (20).

5. Cable junction housing according to one or more of Claims 1 to 4, **characterized in that** optical waveguide bundles can be moved over between the first mounting plane defined by the rear wall (12) and the second mounting plane defined by the front wall (20) through the bushing (23).

6. Cable junction housing according to one or more of Claims 1 to 5, **characterized in that** the bushing (23) is formed in a lower section of the front wall (20).

7. Cable junction housing according to one or more of Claims 1 to 6, **characterized in that** at least one tension support element (25) and/or at least one routing element (24) is fixed on the front wall (20) in order to support the optical waveguide bundles in the region of the second mounting plane in particular with respect to tensile loading and/or in order to route the optical waveguide bundles in the region of the second mounting plane whilst maintaining permissible minimum bending radii.

## Revendications

1. Boîtier de dérivation de câbles, à savoir boîtier de distribution routier d'un réseau de câbles d'information, comprenant un élément encastrable pour la manipulation de connexions par épissures et/ou de connexions Patch entre des conducteurs à fibres optiques guidés dans des câbles de conducteurs à fibres optiques à l'intérieur du boîtier de dérivation de câbles, avec un corps de base (11) de l'élément encastrable pouvant être monté fixement dans le boîtier de dérivation de câbles, le corps de base (11) présentant une paroi arrière (12), une paroi avant (20) et au moins une paroi latérale (13, 14), la paroi arrière (12) du corps de base (11) définissant un premier plan de montage, dans lequel peuvent être reçus des câbles de conducteurs à fibres optiques arrivant et partant et dans lequel des prolongements de ceux-ci peuvent être posés, par le fait que plusieurs éléments de guidage de câbles (18) sont fixés à la paroi arrière (12) du corps de base (11) sous forme de matrice ou sous forme de colonnes s'étendant les unes à côté des autres et de rangées superposées, au niveau desquels éléments de guidage de câbles peuvent être guidés les câbles de conducteurs à fibres optiques arrivant et partant dans la région du premier plan de montage en conservant des rayons de courbure minimaux admissibles, la paroi avant (20) définissant un deuxième plan de montage au niveau duquel sont fixés des cassettes d'épissure pour la manipulation de connexions par épissures et/ou des modules pour la manipulation de connexions Patch entre les conducteurs à fibres optiques guidés dans les câbles de conducteurs à fibres optiques arrivant et partant, la paroi avant (20) étant fixée de manière pivotante à une paroi latérale (13) et des faisceaux de conducteurs à fibres optiques pouvant être transférés entre le premier plan de montage défini par la paroi arrière (12) et le deuxième plan de montage défini par la paroi avant (20), par le fait que la paroi avant (20), au moins dans une portion qui s'étend à côté de la paroi latérale (13) du corps de base (11) au niveau de laquelle la paroi avant (20) est fixée de manière pivotante, présente une largeur plus courte afin de créer ainsi un passage (23) entre la paroi latérale (13) du corps de base (11) et la paroi avant (20).

2. Boîtier de dérivation de câbles selon la revendication 1, **caractérisé en ce qu'**au moins un élément de décharge de traction (19) est associé au corps de base (11) afin de décharger les câbles de conducteurs à fibres optiques arrivant et partant dans la région du premier plan de montage notamment par rapport à une sollicitation en traction.

3. Boîtier de dérivation de câbles selon la revendication 1 ou 2, **caractérisé en ce que** la paroi avant (20) est fixée de manière pivotante de préférence par le biais de deux charnières (22) au niveau d'une paroi latérale (13) du corps de base (11), les charnières (22) venant en prise d'une part avec la paroi latérale (13) et d'autre part avec une arête de la paroi avant (20) adjacente à la paroi latérale.

4. Boîtier de dérivation de câbles selon l'une quelconque ou plusieurs des revendications 1 à 3, **caractérisé en ce qu'**au moins un élément de retenue de cassette d'épissure (21) pour recevoir des cassettes d'épissure servant à la manipulation de connexions par épissures et/ou au moins un module pour la manipulation de connexions Patch est fixé à la paroi avant (20).

5. Boîtier de dérivation de câbles selon l'une quelconque ou plusieurs des revendications 1 à 4, **caractérisé en ce que** des faisceaux de conducteurs à fibres optiques peuvent être transférés par le passage (23) entre le premier plan de montage défini par la paroi arrière (12) et le deuxième plan de montage défini par la paroi avant (20).

6. Boîtier de dérivation de câbles selon l'une quelconque ou plusieurs des revendications 1 à 5, **caractérisé en ce que** le passage (23) est réalisé dans une portion inférieure de la paroi avant (20) .

7. Boîtier de dérivation de câbles selon l'une quelconque ou plusieurs des revendications 1 à 6, **caractérisé en ce qu'**au moins un élément de décharge de traction (25) et/ou au moins un élément de guidage (24) sont fixés à la paroi avant (20), afin de décharger les faisceaux de conducteurs à fibres optiques dans la région du deuxième plan de montage notamment par rapport à une sollicitation en traction et/ou afin de guider les faisceaux de conducteurs à fibres optiques dans la région du deuxième plan de montage en conservant des rayons de courbure minimaux admissibles.
